# EUROPEAN PATENT APPLICATION

(11) **EP 2 163 516 A1**
(43) Date of publication of application: **17.03.2010**
(21) Application number: 07828210.0
(22) Date of filing: 10.09.2007
(51) Int. Cl.: C01B 31/02

(54) **APPARATUS FOR PRODUCING VAPOR-PHASE-FORMED CARBON STRUCTURE AND PROCESS FOR THE PRODUCTION**

(30) Priority: 14.06.2007 JP 2007157163
(71) Applicant: Hitachi Zosen Corporation, Osaka-shi, Osaka 559-8559 (JP); Oshu City, Iwate 023-0053 (JP)
(72) Inventor: FUKUSHIMA, Ryutaro, Osaka-shi Osaka 559-8559 (JP); HORIUCHI, Hideaki, Osaka-shi Osaka 559-8559 (JP); WATANABE, Kiyofumi, Oshu-shi Iwate 029-4332 (JP)
(74) Representative: Merkle, Gebhard
(86) International application number: PCT/JP2007/067567
(87) International publication number: WO 2008/152746

(57) **Abstract**

An apparatus and a method of producing a vapor-grown carbon structure capable of obtaining a vapor-grown carbon structure with a markedly low production cost are provided.

A vapor-grown carbon structure producing apparatus 1 has a screw feeder 4 for supplying a biomass raw material into a furnace 2, a thermal decomposition zone 5 having a first high-temperature air introducing nozzle 6 for thermally decomposing the supplied raw material at a thermal decomposition temperature of 500 to 900°C, a combustion zone 7 having a second high-temperature air introducing nozzle 8 for combusting a thermal decomposition product at a reaction temperature of 900 to 1300°C, and a charbed zone 9 for holding a combustion residue having passed through the combustion zone 7 and generating a carbon radical in a decomposition gas, to generate a vapor-grown carbon structure. The combustion zone 7 is provided with an adjuvant supply part 20 for supplying at least one selected from an oxidization accelerator, a specific surface area improving gas and a catalyst serving as an adjuvant for generation of a vapor-grown carbon structure.

## Description

### Technical Field

The present invention relates to an apparatus and a method of producing a vapor-grown carbon structure for producing carbon nanotubes, carbon nanofibers, carbon nanoonions, amorphous carbon and so on without employing a CVD method.

### Background Art

As to vapor-grown carbon structures such as carbon nanotubes, carbon nanof ibers, carbon nanoonions, and amorphous carbon, experimental data concerning electron physical property, electric conduction, mechanical property and the like physical properties have been abundantly available in recent years. These structures are useful materials explored for application to an electron discharge element, a display, a field effect type transistor, memory, a semiconductor pressure sensor, a semiconductor acceleration sensor and so on, and are expected for exploitation in a wide variety of industrial fields. As a method of producing a vapor-grown carbon structure, those using a CVD method are known (see Patent document 1).

Also, an apparatus and a method of producing a vapor-grown carbon structure not using a CVD method have been proposed by the inventors of the present application (see Patent document 2).
Patent document 1: Japanese Unexamined Patent Publication (JP-A) No. 2006-062899
Patent document 2: Japanese Patent Application No. 2006-072953

### Disclosure of the Invention

### Problem to be solved by the invention

In production of a vapor-grown carbon structure, reduction of the production cost is an important issue, however, the cost reduction is limited in production using the CVD method.

It is an object of the present invention to provide an apparatus and a method of producing a vapor-grown carbon structure capable of obtaining a vapor-grown carbon structure with a markedly low production cost by enabling production of a vapor-grown carbon structure using a furnace having a thermal decomposition zone and a combustion zone whose heating temperature and air supply quantity are respectively adjustable, rather than using the CVD method.

It is a further object of the present invention to improve the apparatus and the method of producing a vapor-grown carbon structure proposed in Patent document 2, thereby providing an apparatus and a method of producing a vapor-grown carbon structure that realizes increased generation quantity of a vapor-grown carbon structure, an increased specific surface area resulting in improved performance, and an improved yield of the vapor-grown carbon structure.

### Means for solving the problem

The apparatus of producing a vapor-grown carbon structure according to the present invention is an apparatus of producing a vapor-grown carbon structure equipped with a furnace whose heating temperature is adjustable, the apparatus including: a material supply device for supplying a biomass which is a raw material into the furnace; a thermal decomposition zone having a first high-temperature air introducing part, for thermally decomposing the supplied raw material at 500 to 900°C to generate a thermal decomposition product; a combustion zone having a second high-temperature air introducing part, for combusting the thermal decomposition product at 900 to 1300°C to generate a combustion residue mainly composed of carbon; a charbed zone for generating a vapor-grown carbon structure by allowing the combustion residue mainly composed of carbon having passed through the combustion zone to deposit and generate a carbon radical in a deposit layer; and a vapor-grown carbon structure deposit taking-out device for taking out the deposit containing the vapor-grown carbon structure obtained in the charbed zone, wherein the combustion zone is provided with an adjuvant supply part for supplying at least one selected from an oxidization accelerator, a specific surface area improving gas and a catalyst serving as an adjuvant for generation of a vapor-grown carbon structure.

The method of producing a vapor-grown carbon structure according to the present invention (the first method invention) is a method of producing a vapor-grown carbon structure using a furnace having a thermal decomposition zone and a combustion zone whose heating temperature and air supply quantity are respectively adjustable, the method including: a thermal decomposition step for thermally decomposing a supplied raw material into a thermal decomposition gas, a tar content, a char content and an ash content while supplying air in an amount that realizes a partial combustion rate of 0.01 to 0.5 so that a temperature at an outlet of the thermal decomposition zone is 500 to 900°C; a combustion step for combusting a part of the thermal decomposition gas, the tar content, and the char content while supplying air in an amount that realizes a partial combustion rate of 0.1 to 0.5 so that a temperature of the combustion zone is 900 to 1300°C; a charbed generation step for generating a vapor-grown carbon structure by allowing a combustion residue mainly composed of carbon obtained in the combustion step to deposit and generate a carbon radical in a deposit layer; and a vapor-grown carbon structure deposit taking-out step for taking out the deposit containing the vapor-grown carbon structure obtained in the charbed generation step, wherein in the combustion step, at least one selected from an oxidization accelerator, a specific surface area improving gas and a catalyst serving as an adjuvant for generation of a vapor-grown carbon structure is supplied.

The method of producing a vapor-grown carbon structure according to the present invention (the second method invention) is a method of producing a vapor-grown carbon structure using a furnace having a thermal decomposition zone and a combustion zone whose heating temperature and air supply quantity are respectively adjustable, the method including: a thermal decomposition step for thermally decomposing a supplied raw material into a thermal decomposition gas, a tar content, a char content and an ash content while supplying air in an amount that realizes a partial combustion rate of 0.01 to 0.5 so that a temperature at an outlet of the thermal decomposition zone is 500 to 900°C; a combustion step for combusting a part of the thermal decomposition gas, the tar content, and the char content while supplying air in an amount that realizes a partial combustion rate of 0.1 to 0.5 so that a temperature of the combustion zone is 900 to 1300°C; a charbed generation step for generating a vapor-grown carbon structure by allowing a combustion residue mainly composed of carbon obtained in the combustion step to deposit and generate a carbon radical in a deposit layer; and a vapor-grown carbon structure deposit taking-out step for taking out the deposit containing the vapor-grown carbon structure obtained in the charbed generation step, wherein as the raw material, a biomass raw material to which an oxidization accelerator is preliminarily added is used.

In the present specification, the term "vapor-grown carbon structure" means a microscopic carbon structure having various diameters (1 nm to around several hundreds nm), various lengths (1 µm to several hundreds µm), and various shapes (fibrous, hollow, cup-like, spherical, aggregated) such as those called carbon nanotubes, carbon nanofibers, carbon nanocones, carbon nanoonions, amorphous carbon and so on.

As a biomass raw material, for example, wood chips, thinned wood and the like are suited.

In the thermal decomposition zone, a raw material is partly combusted and a thermal decomposition gas, a tar content, a char content and an ash content are generated. The thermal decomposition gas is combustible, and is drawn out through a discharge tube provided in a furnace wall, and used as a fuel.

In the combustion zone, a thermal decomposition product is partly combusted, and as a result, most of the tar content is decomposed, and a combustion residue composed mainly of the char content, and containing the thermal decomposition gas and the ash content is generated.

This combustion residue is deposited as a charbed layer, or those having a small particle size partly passing through the charbed layer. A temperature of the charbed layer (deposit layer) is, for example, 1100°C at the maximum, so that hydrocarbons exist as H· (hydrogen radical), CH₃· (carbon radical), ·O-O· (oxygen radical), ·CH=CH· (ethylene radical), and ·C=C· (acetylene radical). Accordingly, a vapor-grown carbon structure is generated with the charbed layer which is an assembly of carbon being an origin. The deposit layer satisfies requirements of generation of a vapor-grown carbon structure because it contains salts (Na, K) and the like serving as a raw material of a catalyst in carbon, and contains a large amount of carbon which is to be a nucleus required for generation of a carbon radical. Therefore, even when the property of the raw material changes to some extent, a vapor-grown carbon structure can be obtained. In the combustion zone, decomposition of the tar content starts at around 900°C, and almost the all become radicals at a temperature of 1100°C or higher. Therefore, by setting the temperature at 900 to 1300°C (more preferably, 1000 to 1200°C), the object of generating a vapor-grown carbon structure is achieved.

On the upstream side of the charbed layer, by adding an oxidization accelerator such as oxygen, phosphoric acid, zinc chloride, nitrogen dioxide, nitrogen oxide, hydrochloric acid or ozone accompanying the high temperature air for combustion, these substances react with carbon to generate a radical (C ·) on the carbon, and a tar decomposition radical reacts with the radical (C·) on the carbon, so that a generation amount of a vapor-grown carbon structure is dramatically improved. Also, by adding water vapor and/or carbon dioxide as a specific surface area improving gas, C+H₂O→H₂+CO (aqueous gasification reaction), C+CO₂→2CO (Boudoir reaction) and so on occur on the charbed layer, and microscopic pores develop on the vapor-grown carbon structure, resulting in increase in the specific surface area and improvement in the adsorption property. Also, by spraying a catalyst (in particular, a Fe-based catalyst), for example, in the form of a Fe₂(NO₃)₃ solution, a generation amount of a vapor-grown carbon structure dramatically increases due to the catalytic effect. The oxidization accelerator, the specific surface area improving gas, and the catalyst may be supplied singly or in combination of two or more of these.

A vapor-grown carbon structure contained in a deposit of the charbed layer can be obtained by taking out the deposit by a vapor-grown carbon structure deposit taking-out device in a step of taking out a vapor-grown carbon structure deposit, while a vapor-grown carbon structure having a too fine particle size to be accumulated in the charbed layer can be obtained by collecting the undeposited substance having passed through the charbed layer by a vapor-grown carbon structure undeposited substance collecting device such as a cyclone or a bug filter in a subsequent vapor-grown carbon structure undeposited substance collecting step.

The vapor-grown carbon structure thus obtained is suitably used, for example, as a material of immobilizing, decomposing and detoxifying harmful substances such as dioxins and heavy metal compounds.

### Effect of the Invention

According to the apparatus and the method of producing a vapor-grown carbon structure of the present invention, it becomes possible to produce a vapor-grown carbon structure using a furnace having a thermal decomposition zone and a combustion zone whose heating temperature and air supply quantity are respectively adjustable, and to obtain a vapor-grown carbon structure with a markedly low production cost.

### Brief Explanation of Drawings

[Fig. 1] Fig. 1 is a vertical sectional view illustrating an embodiment of an apparatus and a method of producing a vapor-grown carbon structure according to the present invention.
[Fig. 2] Fig. 2 is an electron micrograph of a product obtained by an apparatus and a method of producing a vapor-grown carbon structure according to the present invention.
[Fig. 3] Fig. 3 is an electron micrograph at 10-fold magnification of Fig. 2.
[Fig. 4] Fig. 4 is a graph showing an effect of fixing heavy metals by a vapor-grown carbon structure obtained by an apparatus and a method of producing a vapor-grown carbon structure according to the present invention.

### Explanation of Reference Numerals

(1) vapor-grown carbon structure producing apparatus
(2) furnace
(3) raw material cutting device
(4) raw material supply screw feeder (raw material supply device)
(5) thermal decomposition zone
(6) first high-temperature air introducing nozzle
(7) combustion zone
(8) second high-temperature air introducing nozzle
(9) charbed zone
(10) vapor-grown carbon structure deposit taking-out device
(12) cyclone (vapor-grown carbon structure undeposited substance collecting device)
(13) first valve (vapor-grown carbon structure undeposited substance collecting device)
(15) bug filter (vapor-grown carbon structure undeposited substance collecting device)
(16) second valve (vapor-grown carbon structure undeposited substance collecting device)
(20) adjuvant supply part

### Best Mode for Carrying Out the Invention

An embodiment of the present invention will be described by referring to the drawings.

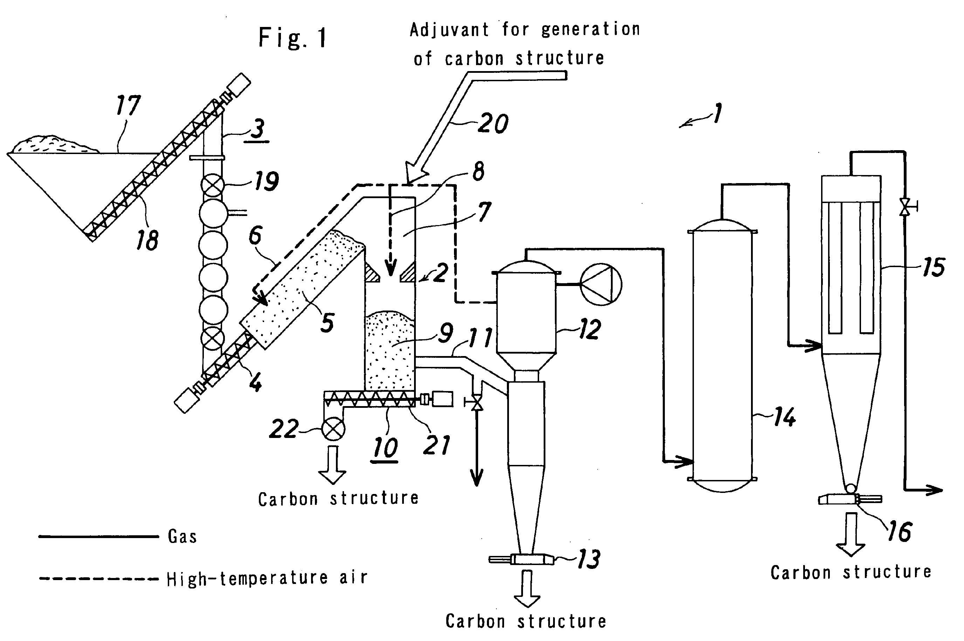

Fig. 1 schematically shows an apparatus of producing a vapor-grown carbon structure according to the present invention.

A vapor-grown carbon structure producing apparatus (1) of the present invention produces a vapor-grown carbon structure using a furnace (2) whose heating temperature is adjustable, and has a raw material cutting device (3) for preparing a biomass raw material such as wood chip, a raw material supply screw feeder (4) as a raw material supply device for supplying the furnace (2) with the biomass raw material, a thermal decomposition zone (5) having a first high-temperature air introducing nozzle (first high-temperature air introducing part) (6), for thermally decomposing the supplied raw material at a thermal decomposition temperature of 500 to 900°C, a combustion zone (7) having a second high-temperature air introducing nozzle (second high-temperature air introducing part) (8), for combusting a thermal decomposition product generated in the thermal decomposition zone (5) at a reaction temperature of 900 to 1300°C, a charbed zone (9) for generating a vapor-grown carbon structure by allowing generation of a carbon radical in a decomposition gas while letting a combustion residue having passed through the combustion zone (7) deposit at a predetermined height, a vapor-grown carbon structure deposit taking-out device (10) for taking out a deposit containing the vapor-grown carbon structure obtained in the charbed zone (9), a discharge tube (11) for drawing out and discharging gas generated in the combustion zone (7), a cyclone (12) for capturing a undeposited substance that is not deposited in the charbed zone (9) from the gas inside the discharge tube (11), a first valve (13) for taking out the undeposited substance captured by the cyclone (12), a gas cooling tower (14) provided downstream the cyclone (12), a bug filter (15) for capturing a undeposited substance that is not deposited in the charbed zone (9) from the gas cooled at the gas cooling tower (14), and a second valve (16) for taking out the undeposited substance captured by the bug filter (15).

The raw material cutting device (3) has a hopper (17), a screw feeder (18), a rotary valve (19) and so on. The rotary valve (19) may be replaced by a pusher-type volumetric feeder.

The raw material supply screw feeder (4) is adapted to feed a raw material inside the thermal decomposition zone (5) diagonally from bottom up. Also the thermal decomposition zone (5) is formed to extend diagonally from bottom up, and its upper end opening communicates with an opening disposed in an upper part of the combustion zone (7). Therefore, the raw material is fed upward while it is deposited in the thermal decomposition zone (5), and when a raw material is newly supplied, a thermal decomposition product of the same amount as the supply amount is dropped into the combustion zone (7).

In the thermal decomposition zone (5), a part of the raw material pushed by the raw material supply screw feeder (4) is partly combusted by the high-temperature air supplied from the first high-temperature air introducing nozzle (6), and as a result, the temperature at its outlet becomes 500 to 900°C, and the raw material is thermally decomposed. The part that receives the high-temperature air in the vicinity of the inlet of the thermal decomposition zone (5) is formed from a fire-proof caster. With this thermal decomposition in the thermal decomposition zone (5), the raw material is thermally decomposed into a thermal decomposition gas, a tar content, an ash content and char.

The combustion zone (7) is embodied by a cylindrical fire-proof caster. The second high-temperature air introducing nozzle (8) penetrates the top of the furnace (2) and opens inside the furnace (2). The high-temperature air from the second high-temperature air introducing nozzle (8) is fed downward along an inner wall of the furnace (2). Thus, a series of air flow inside the furnace (2) flows from top down, to form a down draft design.

In the thermal decomposition zone (5), an air amount is adjusted so that a partial combustion rate is 0.01 to 0.5, while in the combustion zone (7), an air amount is adjusted so that a partial combustion rate is 0.1 to 0.5. Most of the tar content in the gas is decomposed in the combustion zone (7).

To the second high-temperature air introducing nozzle (8), an adjuvant supply part (20) is connected for mixing various gas, liquid and solid with the high-temperature air, and from the second high-temperature air introducing nozzle (8), an oxidization accelerator (oxygen, phosphoric acid, zinc chloride, nitrogen dioxide, nitrogen oxide, hydrochloric acid, ozone or the like), a specific surface area improving gas (water vapor, carbon dioxide or the like), a catalyst (in particular, Fe-based catalyst) or the like is supplied as an adjuvant for generation of a vapor-grown carbon structure while it is mixed with the high-temperature air. Separately from the high-temperature air introducing nozzle (8), a nozzle for applying a generation adjuvant may be provided in an upper part of the charbed.

In the charbed zone (9), while the thermal decomposition gas, the char content and the ash content having passed through the combustion zone (7) pass the same, a vapor-grown carbon structure is generated, and most of the gas including the thermal decomposition gas and a vapor-grown carbon structure that are failed to be collected in the charbed zone are discharged through the discharge tube (11), and passed through the cyclone (12), the gas cooling tower (14) and the bug filter (15), and then introduced into a thermal decomposition gas post treatment device on the downstream. As a result, in the charbed zone (9), a deposit composed mainly of char and containing a vapor-grown carbon structure is generated, while in the cyclone (12) and the bug filter (15), a vapor-grown carbon structure having a too small particle size to deposit in the charbed zone (9) is captured.

The vapor-grown carbon structure taking-out device (10) has a screw conveyer (21) for sending a deposit out of the furnace (2), and a constant-amount cutting device (22) for cutting out the sent-out deposit by constant amounts. As a result, a deposit (char containing a vapor-grown carbon structure) in the charbed zone (9) is sequentially drawn out from a lower part of the charbed zone (9).

Also, the vapor-grown carbon structure captured by the cyclone (12) and the bug filter (15) is collected at a certain interval by opening and closing operation of the first valve (13) and the second valve (16). The cyclone (12), the bug filter (15), the first valve (13) and the second valve (16) constitute a vapor-grown carbon structure undeposited substance collecting device that collects a vapor-grown carbon structure that fails to deposit in the charbed zone.

### Examples

A wood chip (biomass raw material) having the properties shown in Table 1 was cut out at a supply amount of 37.6 kg/h on average by the raw material cutting device (3), and continuously supplied into the thermal decomposition zone (5) by the raw material supply screw feeder (4). Table 2 shows a result of the test. In this example, as shown in Table 2, water vapor of 10 kg/h was sprayed through the second high-temperature air introducing nozzle (8), and comparison was made with the case where water vapor was not sprayed.
[Table 1]

**Table 1 Properties of raw material**

| 1. Result of industrial analysis | | |
|---|---|---|
| Water | [wt%] / Specimen | 15 |
| Volatile matter | [wt%] / Specimen | 78 |
| Fixed carbon | [wit%] / Specimen | 6 |
| Ash content | [wt%] / Specimen | 0.3 |

| 2. Result of elemental analysis | | |
|---|---|---|
| C | [-]/dry | 42.9 |
| H | [-]/dry | 5.2 |
| O | [-]/dry | 36.7 |
| N | [-]/dry | 0.08 |
| S | [-]/dry | 0.01 |
| Cl | [-]/dry | 0.02 |

| 3. Heating value | | |
|---|---|---|
| Higher heating value | [kcal/kg] | 3,970 |
| Lower heating value | [kcal/kg] | 3,602 |

[Table 2]

**Table 2 Test conditions**

| | | |
|---|---|---|
| Average supply amount of raw material | [kg/h] | 37.6 |
| Average water content | [kg/h] | 14.1 |
| Average applied heat quantity | [kcal/h] | 135,435 |
| Air ratio in thermal decomposition zone | [-] | 0.0658 |
| Air ratio in gasification zone | [-] | 0.2114 |
| Total air ratio | [-] | 0.2772 |
| Temperature of thermal decomposition zone | [°C] | 541 |
| Temperature of gasification zone | [°C] | 1093 |
| Temperature of charbed upper part | [°C] | 1061 |
| Water vapor spray amount | [kg/h] | 10.0 |

In the thermal decomposition zone (5), high-temperature air in a proportion of 0.068 relative to a theoretical air amount of the raw material was supplied from the high-temperature air introducing nozzle (6) so that the temperature at an outlet of the thermal decomposition zone (5) was 540°C in average, and the temperature was kept by combustion of a part of the raw material. The raw material was thermally decomposed in this thermal decomposition zone (5) into a thermal decomposition gas, a tar content, a char content and an ash content. These thermal decomposition products were supplied with air in a proportion of 0.211 relative to a theoretical air amount of the raw material from the high-temperature air introducing nozzle (8) so that the temperature was 1100°C in the combustion zone (7) following the thermal decomposition zone (5), and the temperature was kept by partly combusting a part of the thermal decomposition products. By keeping the temperature at 1100°C, the thermal decomposition products assume the radical forms in which a hydrogen-carbon bond is dissociated such as H· (hydrogen radical), CH₃· (carbon radical), ·O-O· (oxygen radical), CH=CH· (ethylene radical), and ·C=C· (acetylene radical). These radicals are cooled to re-polymerize into a vapor-grown carbon structure while they pass through the charbed zone (9), or partly become combustible gas which is then supplied to the thermal decomposition gas post treatment device. The vapor-grown carbon structures are partly accumulated in the charbed layer, while those having a small particle size are captured by the cyclone (12) and the bug filter (15).

In the charbed zone (9), as water vapor is supplied together with the high-temperature air as a specific surface area improving gas from the second high-temperature air introducing nozzle (8), the reaction of C+H₂O→H₂+CO (aqueous gasification reaction) occurs on the charbed layer due to the reaction between the water vapor and the char, and the pore structure of the char develops. The thermal decomposition gas is mainly composed of H₂ and CO as shown in Table 3.
[Table 3]

**Table 3 Test result**

| Average gas composition | | |
|---|---|---|
| H₂ | [vol%] | 20.7 |
| CO | [vol%] | 17.7 |
| CO₂ | [vol%] | 12.8 |
| CH₄ | [vol%] | 1.1 |
| N₂ | [vol%] | 47.8 |
| C₂H₂ | [ppm] | 11 |
| C₂H₄ | [ppm] | 283 |
| C₂H₆ | [ppm] | 27 |
| C₃H₆ | [ppm] | 3 |
| C₆H₆ | [ppm] | 37 |
| H₂/CO | [mol/mol] | 1.2 |

In the charbed zone (9), a drawing amount is adjusted by the vapor-drawn carbon structure taking-out device (10) so that the height of the charbed is constantly the same. In this charbed zone (9), a vapor-grown carbon structure is generated due to generation of C· (carbon radical), in particular, in the thermal decomposition gas, and char containing the vapor-grown carbon structure is continuously collected. Table 4 shows an analytical result of drawn-out char.
[Table 4]

**Table 4 Result of analysis of drawn-out char**

| 1. Result of industrial analysis | | |
|---|---|---|
| Water | [wt%] / Specimen | 0.8 |
| Volatile matter | [wt%] / Specimen | 11.6 |
| Fixed carbon | [wt%] / Specimen | 85.5 |
| Ash content | [wt%] / Specimen | 2.1 |

| 2. Result of elemental analysis | | |
|---|---|---|
| C | [-]/dry | 92.3 |
| H | [-]/dry | 0.1> |
| O | [-]/dry | 5.5 |
| N | [-]/dry | 0.1 |
| S | [-]/dry | 0.1 |
| Cl | [-]/dry | 0.01 |
| Ca | [-]/dry | 0.5 |

| 3. Heating value | | |
|---|---|---|
| Lower heating value | [kcal/kg] | 7,381 |

Also, Table 5 shows a measurement result of a specific surface area. According to Table 5, in contrast to 600 m²/g in the absence of water vapor spray (corresponding to the method of Patent document 2), Example of the present invention showed 1500 m²/g which in a level of exceeding 1480 m²/g that is obtained in the commercially available activated carbon. In other words, according to the present invention, the specific surface area is dramatically improved, and production of a vapor-grown carbon structure having excellent adsorption capacity becomes possible.
[Table 5]

**Table 5 Measurement result of specific surface area**

| | | |
|---|---|---|
| Example of present invention | 600 | [m²/g] |
| No water vapor spray | 1500 | [m²/g] |
| Commercially available activated carbon | 1480 | [m²/g] |

For comparison of a vapor-grown carbon structure obtained by the present invention with commercially available activated carbon, after adjusting pH of an aqueous solution containing 1 mg/L of Pb, Hg to 7, the vapor-grown carbon structure and the commercially available activated carbon were added, respectively in concentrations of 0.3 wt% and 3 wt% relative to the weight of the aqueous solution, and then shaken for 6 hours, and filtered (using glass fiber filter paper of 1 µm in pore diameter) and a concentration of heavy metal in the filter was measured.

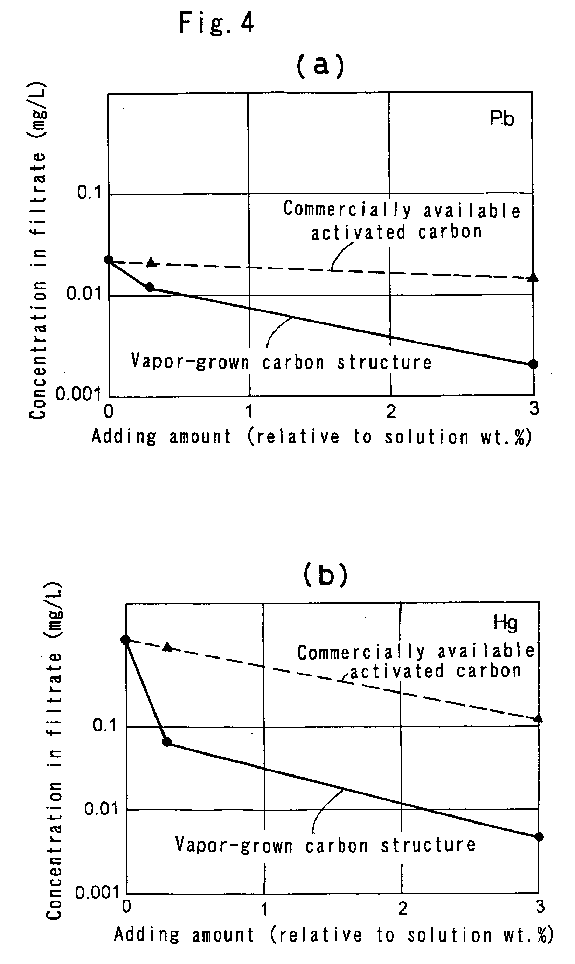

Fig. 4 shows a measurement result of concentration of heavy metal in filter paper. According to Fig. 4(a), in contrast to the commercially available activated carbon in which Pb concentration in the filter paper was little reduced even when the adding amount was 3 wt% in terms of wt% relative to the solution, reduction to 1/10 or less was observed by the vapor-grown carbon structure produced by the present invention when 3 wt% in terms of wt% relative to the solution was added. According to Fig. 4(b), in contrast to the commercially available activated carbon in which Pb concentration in the filter paper was reduced to about 1/10 when the adding amount was 3 wt% in terms of wt% relative to the solution, the vapor-grown carbon structure produced by the present invention showed reduction to 1/100 or less when 3 wt% in terms of wt% relative to the solution was added. This demonstrates that the vapor-grown carbon structure produced by the present invention achieves higher effect of fixing heavy metals than the commercially available activated carbon having a substantially equal specific surface area.

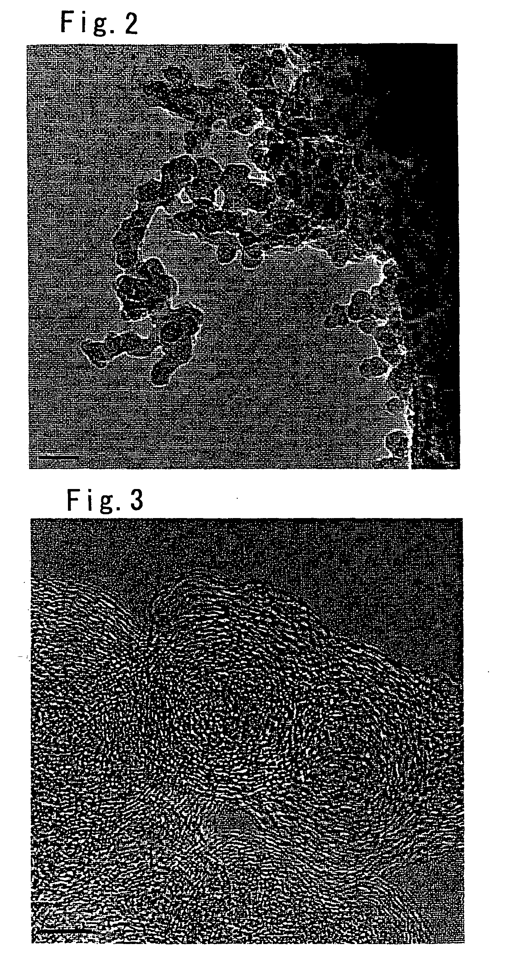

Fig. 2 and Fig. 3 show photographs of a vapor-grown carbon structure collected in the cyclone (12) observed under an electron microscope (available from JEOL Ltd., JEM-2010F: field-emission transmission electron microscope, accelerating voltage 200 kV). These figures also demonstrate that there are a large number of spherical carbon structures having a particle size of 5 nm to 20 nm. These carbon nanoonions and other vapor-grown carbon structures have higher adsorption retaining ability and higher energy field than activated carbon, and exhibit excellent characteristics for fixation of heavy metal, and fixation and decomposition of dioxin, PCB, phenol, benzene and the like, as shown in Fig. 4.

The above described apparatus and method dramatically reduce the production cost in comparison with the CVD method, and makes it possible to obtain an inexpensive carbon tube.

### Industrial Applicability

Carbon nanotubes, carbon nanofibers, carbon nanoonions, amorphous carbon and the like vapor-grown carbon structures that are useful materials of which applications to an electron emission element, a display, a field effect type transistor, a memory, a semiconductor pressure sensor, a semiconductor acceleration sensor and the like are studied, can be obtained with markedly low production cost.

## Claims

1. An apparatus of producing a vapor-grown carbon structure equipped with a furnace whose heating temperature is adjustable, the apparatus comprising:
a material supply device for supplying a biomass which is a raw material into the furnace;
a thermal decomposition zone having a first high-temperature air introducing part, for thermally decomposing the supplied raw material at 500 to 900°C to generate a thermal decomposition product;
a combustion zone having a second high-temperature air introducing part, for combusting the thermal decomposition product at 900 to 1300°C to generate a combustion residue mainly composed of carbon;
a charbed zone for generating a vapor-grown carbon structure by allowing the combustion residue mainly composed of carbon having passed through the combustion zone to deposit and generate a carbon radical in a deposit layer; and
a vapor-grown carbon structure deposit taking-out device for taking out the deposit containing the vapor-grown carbon structure obtained in the charbed zone,
wherein the combustion zone is provided with an adjuvant supply part for supplying at least one selected from an oxidization accelerator, a specific surface area improving gas and a catalyst serving as an adjuvant for generation of a vapor-grown carbon structure.

2. The apparatus of producing a vapor-grown carbon structure according to claim 1, further comprising a vapor-grown carbon structure undeposited substance collecting device for collecting a vapor-grown carbon structure that fails to deposit in the charbed zone.

3. A method of producing a vapor-grown carbon structure using a furnace having a thermal decomposition zone and a combustion zone whose heating temperature and air supply quantity are respectively adjustable, the method comprising:
a thermal decomposition step for thermally decomposing a supplied raw material into a thermal decomposition gas, a tar content, a char content and an ash content while supplying air in an amount that realizes a partial combustion rate of 0.01 to 0.5 so that a temperature at an outlet of the thermal decomposition zone is 500 to 900°C;
a combustion step for combusting a part of the thermal decomposition gas, the tar content, and the char content while supplying air in an amount that realizes a partial combustion rate of 0.1 to 0.5 so that a temperature of the combustion zone is 900 to 1300°C;
a charbed generation step for generating a vapor-grown carbon structure by allowing a combustion residue mainly composed of carbon obtained in the combustion step to deposit and generate a carbon radical in a deposit layer; and
a vapor-grown carbon structure deposit taking-out step for taking out the deposit containing the vapor-grown carbon structure obtained in the charbed generation step,
wherein in the combustion step, at least one selected from an oxidization accelerator, a specific surface area improving gas and a catalyst serving as an adjuvant for generation of a vapor-grown carbon structure is supplied.

4. A method of producing a vapor-grown carbon structure using a furnace having a thermal decomposition zone and a combustion zone whose heating temperature and air supply quantity are respectively adjustable, the method comprising:
a thermal decomposition step for thermally decomposing a supplied raw material into a thermal decomposition gas, a tar content, a char content and an ash content while supplying air in an amount that realizes a partial combustion rate of 0.01 to 0.5 so that a temperature at an outlet of the thermal decomposition zone is 500 to 900°C;
a combustion step for combusting a part of the thermal decomposition gas, the tar content, and the char content while supplying air in an amount that realizes a partial combustion rate of 0.1 to 0.5 so that a temperature of the combustion zone is 900 to 1300°C;
a charbed generation step for generating a vapor-grown carbon structure by allowing a combustion residue mainly composed of carbon obtained in the combustion step to deposit and generate a carbon radical in a deposit layer; and
a vapor-grown carbon structure deposit taking-out step for taking out the deposit containing the vapor-grown carbon structure obtained in the charbed generation step,
wherein as the raw material, a biomass raw material to which an oxidization accelerator is preliminarily added is used.

5. The method of producing a vapor-grown carbon structure according to claim 4 , wherein in the combustion step, at least one selected from an oxidization accelerator, a specific surface area improving gas and a catalyst serving as an adjuvant for generation of a vapor-grown carbon structure is supplied.

6. The method of producing a vapor-grown carbon structure according to any one of claims 3, 4 and 5, wherein a vapor-grown carbon structure undeposited substance that fails to deposit in the charbed zone is collected.
